# EUROPÄISCHE PATENTSCHRIFT

(11) **EP 0 262 705 B1**
(45) Veröffentlichungstag und Bekanntmachung des Hinweises auf die Patenterteilung: **18.01.1995**
(21) Anmeldenummer: 87201639.9
(22) Anmeldetag: 31.08.1987
(51) Int. Cl.: H04J 3/06

(54) **Schaltungsanordnung für Vermittlungsstellen eines vermaschten Fernmeldenetzes**
Arrangement for the nodes of a meshed telecommunication network
Dispositif de commutation pour les points nodaux d'un réseaux de télécommunications maillé

(30) Priorität: 03.09.1986 DE 3629931
(43) Veröffentlichungstag der Anmeldung: 06.04.1988
(73) Patentinhaber: Philips Patentverwaltung GmbH, 22335 Hamburg (DE); Philips Electronics N.V., 5621 BA Eindhoven (NL)
(72) Erfinder: Maisel, Manfred, Dipl.-Ing., D-8551 Igensdorf (DE); Kölle, Erich, Dipl.-Ing., D-8500 Nürnberg (DE); Hauenstein, Gerhard, Dipl.-Ing,, D-8500 Nürnberg 50 (DE)
(74) Vertreter: Peuckert, Hermann, Dipl.-Ing.

(56) Entgegenhaltungen:
- US-A- 2 986 723
- US-A- 4 142 069
- PROCEEDINGS IEEE INTERNATIONAL CONFERENCE ON COMMUNICATIONS, Minneapolis, MA,17.-19. Juni 1974, Seiten 2D-1 - 2D-5; J.G. BAART et al.: "Networksynchronization and alarm remoting in dataroute"

## Beschreibung

Die Erfindung betrifft ein hierarchisches Synchronisationsverfahren für Vermittlungsstellen eines vermaschten Fernmeldenetzes gemäß dem Oberbegriff des Patentanspruchs 1.

Mobile Wählvermittlungssysteme werden häufig im militärischen Bereich sowie bei bestimmten Bedarfsträgern, z.B. bei der Polizei, beim Katastrophenschutz, auf Großbaustellen eingesetzt. In einem solchen mobilen Wählvermittlungssystem können alle Teilnehmer durch Selbstwahl im eigenen Netz sowie in gleichartigen benachbarten Netzen direkt und ohne Verzögerung erreicht werden. Bei einem solchen mobilen Wählvermittlungssystem ist es notwendig, das Netz schnell aufzubauen und zu verändern, so daß bei der Zusammenstellung die benötigten Vermittlungseinrichtungen unter Berücksichtigung der jeweiligen Betriebsbedingungen ausgewählt werden können und ein Ortswechsel der Teilnehmer ohne Eingriff in die Organisation des Netzes möglich ist.

Jeder Teilnehmer erhält eine fest zugeordnete Rufnummer, welchen davon unabhängig ist, an welcher Stelle des Netzes sich der Teilnehmer gerade befindet. Das mobile Wählvermittlungssystem ist dabei an die schwankende Ausdehnung der Netze, an die sich wandelnde Netzstruktur, an das sich stark verändernde Verkehrsaufkommen und an die wechselnde Verfügbarkeit von Verbindungswegen anzupassen.

In PKI Technische Mitteilungen 1/1985, Seiten 18 bis 26 ist ein Multi-Kommunikationssystem MKS 200 ausführlich beschrieben und erläutert. Im Kapitel 3 "Netzaspekte" Seite 23, mittlere Spalte bis Seite 26, linke Spalte sind der Aufbau des Netzes unter Verwendung eines Zielsuchverfahrens und die Anforderungen an die Netzsynchronisation erläutert. Hinsichtlich der Netzsynchronsiation ist auf Seite 25, linke Spalte ausgeführt, daß der Aufbau des Taktverteilnetzes (Taktbaum) mittels Netzwerkmanagement-Meldungen im zentralen Zeichenkanal erfolgt.

Für die Netzsynchronisation sind eine Reihe verschiedener Synchronisationsverfahren bekannt, welche in Fernmelde-Praxis Band 59/1982, Seiten 887 bis 910, insbesondere Seite 892 näher beschrieben sind. Auf Seite 892 ist bezüglich der hierarchischen Master-Slave-Methode angegeben, daß dieses Verfahren besonders für Maschennetze geeignet ist. Eine Vermittlungsstelle arbeit dabei als Master mit einem unabhängigen Takt, der zur Steuerung der Takte der untergeordneten Slave-Vermittlungsstellen benutzt wird. Dabei ist jedem Takt entsprechend der Stellung in der Hierarchie eine Kennung zugeordnet, wobei beim Ausfall des Master-Taktes automatisch der in der Hierarchie nächstniedrigere Slave-Takt zur Synchronisation herangezogen wird.

Beim hierarchischen Master-Slave-Verfahren müssen laufend Informationen über den hierarchischen Status der Vermittlungsstellen übertragen und in jeder Vermittlungsstelle ausgewertet werden. In einem mobilen Wählvermittlungssystem mit einer Vielzahl von Vermittlungsstellen führt dies zu einer hohen Verkehrsbelastung in den Vermittlungsstellen, bei der Übertragung und Auswertung der im zentralen Zeichenkanal übertragenen Synchronisationsmeldung. Beim Ausfall des Master-Taktes oder Ausfall der Verbindungsleitung zwischen der Master-Vermittlungsstelle und der Slave-Vermittlungsstelle erfordert die Wiederherstellung der Synchronisation bei einer langen Kennung sehr viel Zeit zur Auffindung des Master-Takts.

In Fernmelde-Praxis ist nicht weiter erläutert, auf welche Art und Weise bei Ausfall des Master-Taktes der in der Hierarchie nächst niedrigere Slave-Takt ermittelt wird.

Aus US PS 2,986,723 ist ein synchronisiertes vermaschtes Fernmeldenetz bekannt, bei dem jede Vermittlungsstelle eine von Vermittlungsstelle unterschiedliche Synchronkennung zugeordnet ist. Zur Durchführung einer selbstorganisierenden Synchronisation auf einen Haupttaktgeber werden zwischen den Vermittlungsstellen über Kommunikationskanäle Daten ausgetauscht, die kontinuierlich mit gespeicherten Daten verglichen werden.

Der Erfindung liegt die Aufgabe zugrunde, ein hierarchisches Synchronisationsverfahren derart anzugeben, daß die Netzsynchronisation innerhalb kürzester Zeit hergestellt werden kann und daß die Sicherstellung der Netzsynchronisation, die Verkehrsbelastung in den Vermittlungsstellen nur geringfügig erhöht.

Diese Aufgabe wird durch ein hierarchisches Synchronisationsverfahren mit den Merkmalen des Patentanspruchs 1 gelöst.

Das erfindungsgemäße hierarchische Synchronisationsverfahren weist den Vorteil auf, daß der Aufbau des Taktbaumes ohne Kenntnis der Netztopologie automatisch erfolgt und daß bereits im Nachrichtennetz vorhandene Einrichtungen für das Zielsuchverfahren (vgl. PKI Technische Mitteilungen 1/1985, Seiten 18 bis 26), für die Netzsynchronissation mitbenutzt werden können. Der Speicheraufwand für die Taktmeldungen (Klassen- und Synchron-Kennung) in den einzelnen Vermittlungsstellen ist gering und durch die Anwendung des vorgenannten Synchronsationverfahren kann der kürzeste und freie Verbindungsweg im Fernmeldenetz auf einfache Art und Weise gefunden werden.

Die Ausgestaltung des hierarchischen Synchronisationsverfahrens gemäß Patentanspruch 2 weist den Vorteil auf, daß durch die zeitliche Bewertung nicht alle empfangenen Taktmeldungen ausgewertet werden müssen, wodurch die Belastung der Vermittlungsstellen für das Auswerten der empfangenen Taktmeldungen reduziert werden kann. Dadurch wird auf einfache Art und Weise der kürzeste Taktbaum aufgebaut.

Die Ausgestaltung des hierarchischen Synchronisationsverfahrens gemäß Patentanspruch 3 weist den Vorteil auf, daß durch die zusätzliche Markierung die Eindeutigkeit beim Aufbau des Taktbaums sichergestellt wird.

Die Schaltungsanordnung zur Durchführung des Verfahrens erfordert lediglich eine entsprechende Programmierung einer für das Zielsuchverfahren benutzten Steuereinrichtung.

Die Erfindung wird im folgenden anhand der in der Zeichnung dargestellten Ausführungsform für verschiedene Betriebszustände des Fernmeldenetzes näher beschrieben und erläutert. Es zeigt:
- Fig. 1: eine Ausführungsform für eine Schaltungsanordnung zur Durchführung des erfindungsgemäßen Verfahrens,
- Fig. 2: den Ablauf der Synchronisation bei Inbetriebnahme von Verbindungsleitungen,
- Fig. 3: den Ablauf der Synchronisation bei Ausfall einer Verbindungsleitung,
- Fig. 4: den Ablauf der Synchronisation in einem hierarchischen Fernmeldenetz,
- Fig. 5: für ein Fernmeldenetz gemäß Fig. 4 den Ablauf der Synchronisation bei Ausfall der Netzübergangsverbindungsleitung,
- Fig. 6: den Ablauf der Synchronisation in einem hierarchischen Fernmeldenetz mit zwei Maschennetzen auf derselben hierarchischen Netzebene und
- Fig. 7: für ein Fernmeldenetz gemäß Fig. 6 den Ablauf der Synchronisation bei Ausfall der Netzübergangsverbindungsleitung zur Vermittlungsstelle der höheren Netzebene, wobei eine Netzübergangsverbindungsleitung zwischen den beiden Maschennetzen besteht.

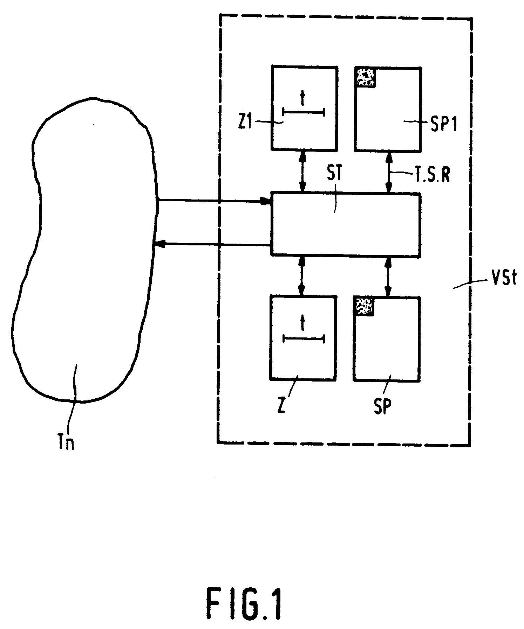

Fig. 1 zeigt eine Ausführungsform zur Durchführung des erfindungsgemäßen hierarchischen Synchronisationsverfahrens. In einer Vermittlungsstelle VSt ist eine mit dem Fernmeldenetz in Verbindung stehende Steuereinrichtung ST und mindestens ein mit dieser verbundener Speicher Sp angeordnet. In diesem Speicher Sp werden in jeder Vermittlungsstelle VSt sowohl Klassen- als auch Synchron-Kennung gespeichert. Beim Einschalten der Vermittlungsstelle VSt wird im Speicher Sp zunächst die dieser Vermittlungsstelle VSt zugeordnete Klassen- und Synchron-Kennung eingetragen und bleibt gespeichert. Weiterhin ist in der Vermittlungsstelle VSt mindestens ein mit der Steuereinrichtung ST verbundenes Zeitglied Z vorgesehen, welches von der Steuereinrichtung ST beim Aussenden der Klassen- und Synchron-Kennung gestartet und beim Empfang dieser Klassen- und Synchron-Kennung wieder zurückgesetzt wird.

Das erfindungsgemäße hierarchische Synchronisationsverfahren wird im folgenden für verschiedene Netzkonfigurationen und verschiedene Betriebszustände im Fernmeldenetz näher erläutert.

Die Netzsynchronisation erfolgt ohne Kenntnis des Netzabbilds, so daß auch beispielsweise bei einem teilzerstörten Fernmeldenetz der Betreib möglich ist, da die Taktabhängigkeit der Vermittlungsstellen VSt stets eindeutig geregelt ist. Wird beim Synchronisationvorgang in der Vermittlungsstelle VSt ein Umschalten auf eine andere Verbindungsleitung vorgenommen, so werden in der Verbindungsleitung lediglich Störgeräusche hervorgerufen, es gehen jedoch dabei keine Gesprächsverbindungen verloren.

Bei jeder Änderung des Netzabbilds baut sich das Taktnetz automatisch auf bzw. um. Solche Änderungen im Netzabbild werden hervorgerufen durch:
1. Inbetriebnahme des Leitungsnetzes sowie Netzerweiterung
2. Inbetriebnahme von Verbindungsleitungen und Ausfall dieser Verbindungsleitungen des Fernmeldenetzes
3. Ausfall einzelner Vermittlungsstellen VSt
4. Inbetriebnahme einer Netzübergangsverbindungsleitung in einem hierarchischen Fernmeldenetz und Ausfall dieser Netzübergangsverbindungsleitung und
5. Inbetriebnahme einer Netzübergangsverbindungsleitung in einem hierarchischen Fernmeldenetz mit zwei Maschennetzen auf derselben hierarchischen Netzebene und Ausfall dieser Netzübergangsverbindungsleitung.

Zur Ermittlung der Rangfolge zwischen den verschiedenen Vermittlungsstellen VSt und damit der Taktabhängigkeit, ist jeder Vermittlungsstelle VSt eine Klassen-Kennung und eine Synchron-Kennung zugeordnet. Die Einteilung der Vermittlungsstellen VSt in die einzelnen Klassen kann beispielsweise wie im folgenden angegebenen vorgenommen werden:
- Klasse 1:: Vermittlungsstellen VSt mit Netzübergangsverbindungsleitungen zu Vermittlungsstellen VSt einer höheren Netzebene
- Klasse 2:: Vermittlungsstellen VSt mit Netzübergangsverbindungsleitungen zu ein einem Maschennetz derselben Hierarchieebene angeordneten Vermittlungsstellen VSt, welche eine Netzübergangsverbindungsleitung zu einer Vermittlungsstelle in einer höheren Hierarchieebene aufweisen.
- Klasse 3:: Vermittlungsstellen VSt ohne Netzübergangsverbindungsleitungen.

Die Vermittlungsstellen VSt der Klasse 1 haben die höchste Priorität und allen Vermittlungsstellen VSt des Fernmeldenetzes ist jeweils eine ganz bestimmte und von Vermittlungsstelle zu Vermittlungsstelle unterschiedliche Synchron-Kennung zugeordnet, wobei die Synchron-Kennung mit der Zahl 1 die höchste Priorität bedeutet.

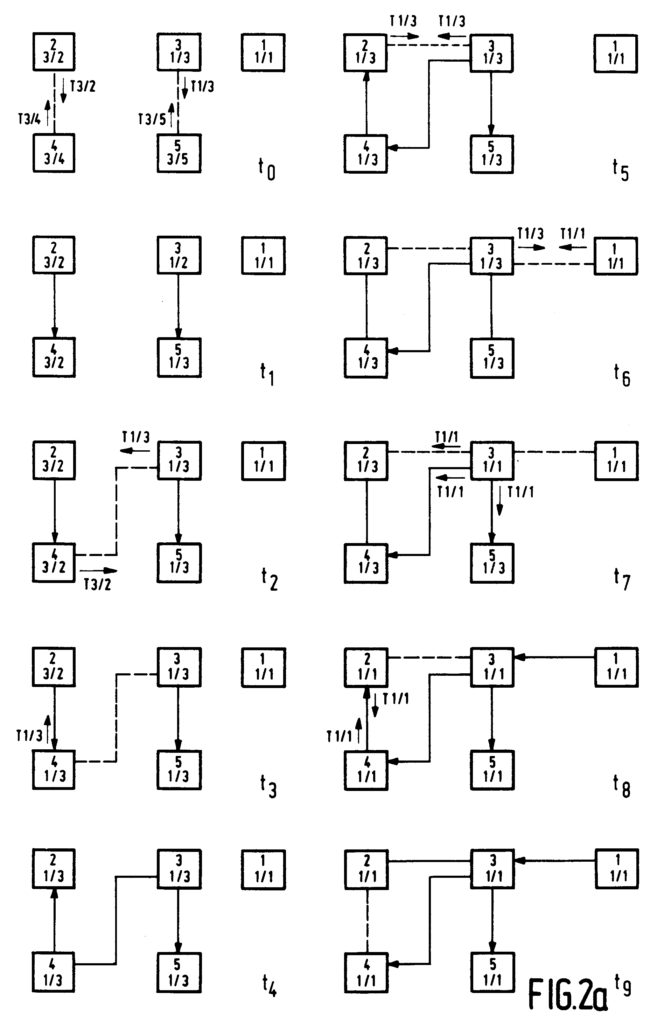

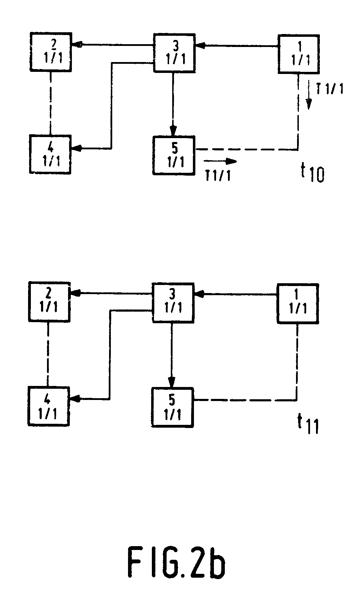

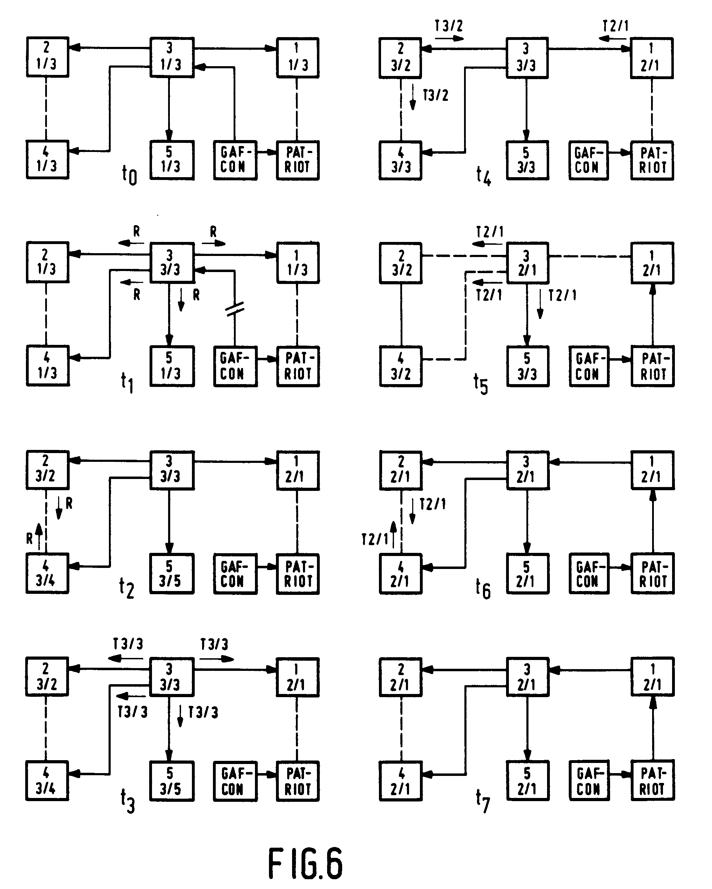

In den Fig. 2 bis 7 sind die verschiedenen Vermittlungsstellen VSt durch Blöcke dargestellt, wobei durch die Beschriftung in den Blöcken durch die erste Zahl die Klassen-Kennung und die zweite Zahl die Synchron-Kennung angegeben ist. Durch die --- -Linie soll auf eine Verbindungsleitung ohne Taktgewinnung, durch die ― -Linie auf eine Verbindungsleitung mit Taktführung hingewiesen werden, wobei die Pfeilspitze die Taktrichtung angibt. Zur Netzsynchronisation werden Taktmeldungen T, Mastersuchmeldungen S und Masterresetmeldungen R im zentralen Zeichenkanal gesendet und in jeder Vermittlungsstelle VSt im Speicher SP1 gespeichert. In den Meldungen T, S, R ist stets die Nummer der aussendenden Vermittlungsstelle VSt enthalten.

Die Taktmeldungen T (ergänzt in den Fig. 2 bis 7 durch die Klassen-Kennung und Synchron-Kennung) werden dazu benutzt, die Taktabhängigkeit zwischen zwei Vermittlungsstellen VSt festzustellen. Wenn eine Vermittlungsstelle VSt eine Taktmeldung T mit höherer Priorität erhält, so sendet diese über alle anderen Verbindungleitungen diese Taktmeldung T weiter und wählt als Verbindungsweg jene Verbindungsleitung aus, von welcher die Taktmeldung T zuerst empfangen wurde. Dadurch werden mehrfach eingehende Taktmeldungen T gleicher Priorität nicht mehr weiterverarbeitet.

Um auch dann einen fehlerfreien Taktbaum erstellen zu können, wenn im Fernmeldenetz mehrere Ereignisse gleichzeitig auftreten und sich die Meldungen überschneiden, wird beim Senden der Taktmeldungen T eine Markierung zur Unterscheidung verschiedener Betriebszustände im Fernmeldenetz hinzugefügt. Die verschiedenen Betriebszustände können sein
a) Inbetriebnahme einer Verbindungsleitung
b) Zweitwegsuche
c) Neusynchronisation nach Verlust der Synchronisation.

Die Markierungen werden entsprechend ihrer Priorität bearbeitet, wobei die Markierung betreffend der Neusynchronisation die höchste Priorität aufweist.

Die Mastersuchmeldungen S dienen dazu, bei Ausfall einer Verbindungsleitung festzustellen, ob noch ein weiterer Verbindungsweg zum ursprünglichen Taktmaster vorhanden ist. Der Taktmaster leitet bei Empfang einer Mastersuchmeldung S durch Aussenden einer Taktmeldung T die Bildung eines neuen Taktbaums ein. Der Mastersuchmeldung S kann zusätzlich zur Nummer der aussendenden Vermittlungsstelle VSt eine weitere Nummer hinzugefügt werden, um den mehrfachen Empfang derselben Mastersuchmeldung S erkennen zu können.

Die Masterresetmeldung R dient dazu eine völlige Neusynchronistion des Fernmeldenetzes einzuleiten. Dies erfolgt dann, wenn beispielsweise der ursprüngliche Taktmaster der höchsten Priorität ausgefallen ist. Auch bei der Masterresetmeldung R kann zusätzlich zur Nummer der aussendenden Vermittlungsstelle VSt eine Nummer hinzugefügt werden, um den mehrfachen Empfang derselben Masterresetmeldung R erkennen zu können.

Anhand Fig. 2 wird im folgenden die Inbetriebnahme von Verbindungsleitungen des Fernmeldenetzes näher beschrieben und erläutert, wobei als Netzstruktur ein Maschennetz zugrunde gelegt wird. Zum Zeitpunkt t₀ werden zwei Verbindungsleitungen in Betrieb genommen und die Rangfolge der beteiligten Vermittlungsstellen 2 und 4 bzw. 3 und 5 wird mittels der Taktmeldungen T3/2 und T3/4 bzw.T1/3 und T3/5 ermittelt. Wie bereits erläutert, bedeuten die verschiedenen Zahlen jeweils die Klassen-Kennung und die Synchron-Kennung bei der Taktmeldung T.

Zum Zeitpunkt t₁ ist die Taktabhängigkeit zwischen den verschiedenen Vermittlungsstellen 2 bis 5 ermittelt, wobei die Vermittlungsstelle 4 den Takt mit der höheren Priorität von der Vermittlungsstelle 2 und die Vermittlungsstelle 5 den Takt von der Vermittlungsstelle 3 übernimmt. Dadurch entstehen zwei Netzinseln.

Zum Zeitpunkt t₂ wird eine Verbindungsleitung zwischen den beiden Netzinsel in Betrieb genommen und mittels der Taktmeldungen T1/3 und T3/2 wird die Rangfolge der Takte festgestellt.

Da die Vermittlungsstelle 3 innerhalb des Leitungsnetzes die höchste Priorität aufweist, sendet zum Zeitpunkt t₃ die Vermittlungsstelle 4 die empfangene Taktmeldung T1/3 über alle Verbindungsleitungen zu den benachbarten Vermittlungsstellen VSt, d.h. zur Vermittlungsstelle 2 aus.

Zum Zeitpunkt t₄ ist in den Vermittlungsstellen 2 und 4 die Unschaltung auf den Takt der Vermittlungsstelle 3 erfolgt.

Zum Zeitpunkt t₅ wird zwischen den Vermittlungsstellen 2 und 3 ein weiteres Leitungsbündel in Betreib genommen. Zwischen den beiden Vermittlungsstellen werden Taktmeldungen T1/3 ausgetauscht und da die jeweils empfangenen Taktmeldungen dieselbe Priorität aufweisen, erfolgt in den Vermittlungsstellen 2 und 3 keine Reaktion (beide Vermittlungsstellen beziehen den Takt vom selben Taktmaster). Für den Fall, daß gerade eine Zweitwegsuche durchgeführt wird, werden die Taktmeldungen T mit gleicher Priorität über alle Leitungen zu allen an die Vermittlungsstelle VSt angeschlossenen Vermittlungsstellen VSt weitergegeben.

Wird bei Inbetriebnahme einer Verbindungsleitung gerade eine Zweitwegsuche oder eine Neusynchronisation durchgeführt, so werden keine Taktmeldungen T gesendet, sondern die entsprechende Mastersuchmeldung S bzw. Masterresetmeldung R von der Vermittlungsstelle VSt gesendet.

Zum Zeitpunkt t₆ wird das Leitungsnetz um die Vermittlungsstelle 1 erweitert. Zwischen den Vermittlungsstellen 1 und 3 werden Taktmeldungen T ausgetauscht.

Da die Vermittlungsstelle 1 die höchste Priorität aufweist, sendet die Vermittlungsstelle 3 zum Zeitpunkt t₇ die empfangene Taktmeldung T1/1 über alle Verbindungsleitungen zu den angeschlossenen Vermittlungsstellen 2 und 4 aus.

Zum Zeitpunkt t₈ bezieht die Vermittlungsstelle 3 den Takt von der Vermittlungsstelle 1. Zwischen den Vermittlungsstellen 2 und 4 werden Taktmeldungen T1/1 ausgetauscht.

Zum Zeitpunkt t₉ schaltet die Vermittlungsstelle 2 seinen Taktbezug um, wodurch innerhalb des Leitungsnetzes ein synchroner Taktbaum aufgebaut ist. Zum Zeitpunkt t₁₀ wird eine neue Verbindungsleitung zwischen der Vermittlungsstelle 1 und 5 in Betrieb genommen. Zwischen den beiden Vermittlungsstellen 1 und 5 werden Taktmeldungen T1/1 ausgetauscht.

Da die Vermittlungsstellen 1 und 5 denselben Taktmaster haben, wird zum Zeitpunkt t₁₁ der Taktbaum nicht geändert.

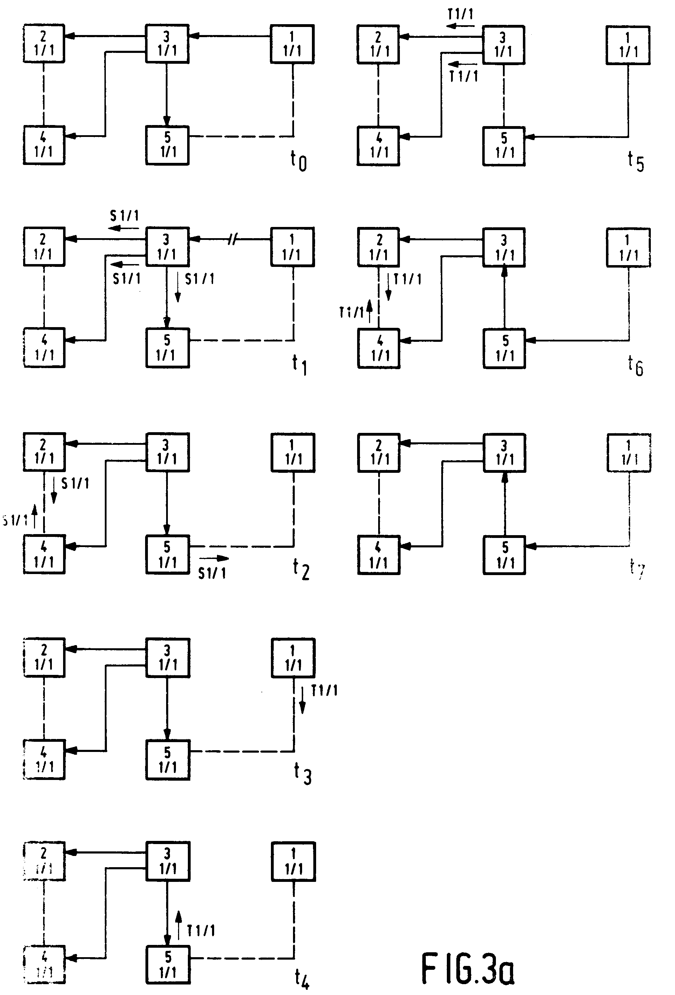

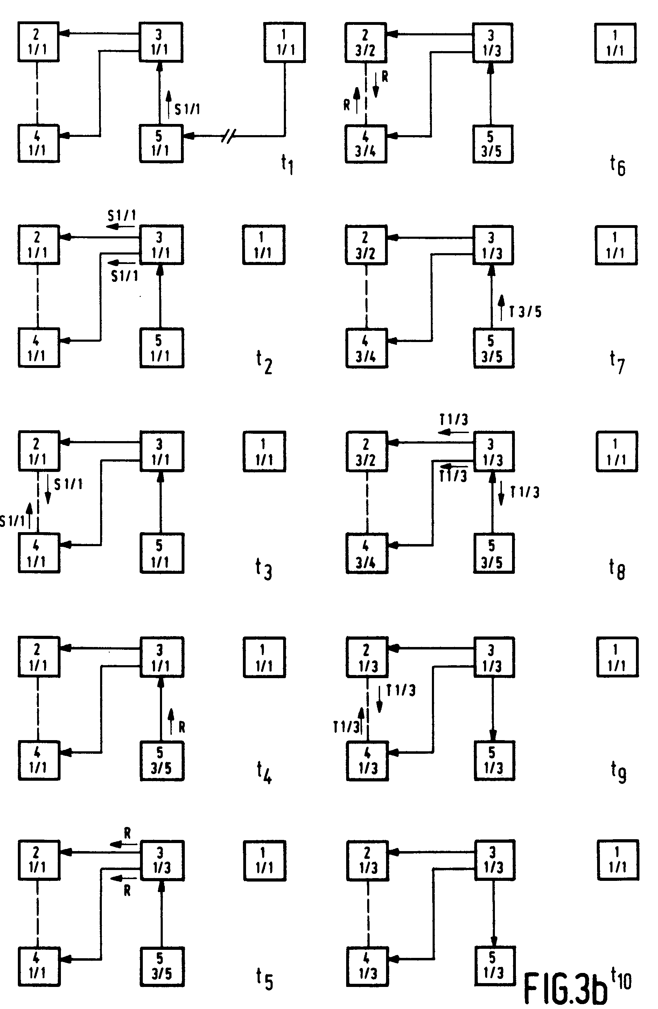

Anhand Fig. 3a und Fig. 3b wird im folgenden das hierarchische Synchronisationsverfahren bei Ausfall einer Verbindungsleitung im Fernmeldenetz näher beschrieben und erläutert. Fällt eine Verbindungsleitung aus, über welche keine Taktübertragung erfolgt, ist, so hat dies in der Vermittlungsstelle VSt bei der Netzsynchronisation keinen Einfluß. Beim Ausfallen einer Verbindungsleitung über welche der Taktmaster zur Vermittlungsstelle VSt übertragen wurde, versucht die Vermittlungsstelle VSt einen zweiten Verbindungsweg zum ursprünglichen Taktmaster zu finden.

Falls nur noch ein einziger Verbindungsweg zur benachbarten Vermittlungsstellen VSt in Betrieb ist, kann diese Verbindungsleitung nicht unmittelbar zur Taktableitung herangezogen werden, da die benachbarten Vermittlungsstellen VSt diese Verbindungsleitung bereits zur Taktableitung benutzen könnten. Beim Aussenden der Mastersuchmeldung S ist sicherzustellen, daß keine Taktschleifen hergestellt werden.

Die Vermittlungsstellen VSt leiten die empfangene Mastersuchmeldung S über die jeweiligen Verbindungsleitungen zu allen angeschlossenen Vermittlungsstellen VSt weiter. Der Suchvorgang wird nur in jener Vermittlungsstelle VSt überwacht, deren Verbindungsleitung, über welche der Takt bezogen wurde, ausgefallen ist. Während dieser Zeit werden keine Taktmeldungen T wegen Inbetriebnahme von Leitungsbündeln bearbeitet. Falls während des Suchvor-gangs eine solche Verbindungsleitung in Betrieb genommen wird, wird anstelle der Taktmeldung T über diese Verbindungsleitung die Mastersuchmeldung S gesendet. Beim Ausfall sämtlicher Verbindungsleitungen zu benachbarten Vermittlungstellen läuft die Vermittlungsstelle als Insel weiter und leitet den Takt von der eigenen Taktquelle ab.

Das hierarchische Synchronisationsverfahren wird im folgenden für den Fall näher beschrieben und erläutert, daß ein Zweitweg zum ursprünglichen Taktmaster im Fernmeldenetz zur Verfügung steht (vgl. Fig.3a). Die Steuereinrichtung ST startet beim Aussenden der Klassen- und Synchron-Kennung das Zeitglied Z, dessen Verzögerungszeit so groß gewählt wird, daß die Mastersuchmeldung S das gesamte Fernmeldenetz durchlaufen kann. Empfängt die Steuereinrichtung ST die Mastersuchmeldung S während der Verzögerungszeit, so wird das Zeitglied Z wieder zurückgesetzt und von der Steuereinrichtung ST erneut gestartet. Dadurch werden Überschneidungen von Mastersuchmeldungen S beim Aufbau des neuen Taktbaum vermieden.

Ist die Verzögerungszeit abgelaufen, so sendet die Vermittlungsstelle VSt erneut die Klassen- und Synchron-Kennung aus, wobei zum Unterscheiden der Funktion von gesendeter Klassen- und Synchron-Kennung nun die Markierung zur Kennzeichnung der Taktmeldung hinzugefügt wird. Die Taktmeldung T wird, wie bereits weiter oben geschrieben, von den Vermittlungsstellen VSt ausgewertet, um den Takt mit der höchsten Priorität zu ermitteln. In weiterer Ausgestaltung der Erfindung kann die Verzögerungszeit des Zeitglieds Z so gewählt werden, daß die Laufzeiten sowohl der Mastersuchmeldung S als auch der Taktmeldung T berücksichtigt werden. Falls sich im Fernmeldenetz mehrere Taktmaster befinden, wird in jeder Vermittlungsstelle VSt anhand der empfangenen Klassen- und Synchron-Kennung der Takt mit der höchsten Priorität ermittelt und der Taktbaum aufgebaut.

Zum Zeitpunkt t₀ liegt ein synchrones Netz vor, wobei die Vermittlungsstelle 1 den Takt mit der höchsten Priorität aufweist und die weiteren Vermittlungsstellen 2 bis 5 diesen Takt zur Synchronisation heranziehen.

Zum Zeitpunkt t₁ ist die Verbindungsleitung zwischen den Vermittlungen 1 und 3 ausgefallen. Dieser Ausfall der Verbindungsleitung wird von der Steuereinrichtung ST in der Vermittlungsstelle 3 erkannt und von der Steuereinrichtung ST werden über die Verbindungsleitungen zu allen angeschlossenen Vermittlungsstellen VSt Mastersuchmeldungen S 1/1 ausgesandt.

Die von den Vermittlungsstellen 2, 4 und 5 empfangenen Mastersuchmeldungen S 1/1 werden zum Zeitpunkt t₂ ebenfalls über alle Verbindungsleitungen zu allen angeschlossenen Vermittlungsstellen VSt ausgesandt.

Zum Zeitpunkt t₃ empfängt die Vermittlungsstelle 1 die Mastersuchmeldung S 1/1, welche die Vermittlungsstelle 5 gesendet hat, wodurch die Steuereinrichtung ST in der Vermittlungsstelle 1 ihrerseits nun eine Taktmeldung T 1/1 sendet.

Die über Verbindungsleitung zwischen den Vermittlungsstellen 1 und 5 in der Vermittlungsstelle 5 empfangene Taktmeldung T 1/1 wird von der Steuereinrichtung ST zum Zeitpunkt t₄ über die Verbindungsleitung zur Vermittlungsstelle 3 gesendet.

Zum Zeitpunkt t₅ sendet die Vermittlungsstelle 3 die Taktmeldung T 1/1 über die Verbindungsleitung zu den angeschlossenen Vermittlungsstellen 2 und 4 aus.

In der Vermittlungsstelle 3 wird zum Zeitpunkt t₆ der Takt umgeschaltet und die Vermittlungsstellen 2 und 4 senden die empfangenen Taktmeldungen T 1/1 allen an diese angeschlossenen Vermittlungstellen zu.

Zum Zeitpunkt t₇ ist der synchrone Netzzustand wieder erreicht.

Anhand der Fig. 3b wird im folgenden der Fall beschrieben, daß kein Zweitweg zum ursprünglichen Taktmaster im Fernmeldenetz vorhanden ist. Während der Verzögerungszeit des Zeitglieds Z werden von der Vermittlungsstelle VSt keine ausgesendeten Mastersuchmeldungen S empfangen, so daß die Steuereinrichtung ST zur Neusynchronisation des Netzes eine Mastersuchmeldung R sendet. Fällt diese Vermittlungsstelle VSt während des Suchvorgangs aus, so erkennen dies alle an diese Vermittlungsstelle VSt angeschlossenen Vermittlungsstellen VSt, wodurch diese eine erneute Zweitwegsuche mittels Mastersuchmeldungen S einleiten. Diese Zweitwegsuche wird nur in den Vermittlungsstellen VSt, welche den Mastervorgang eingeleitet haben, auch zeitlich überwacht. Dadurch wird gewährleistet, daß das Fernmeldenetz stets neu synchronisiert wird, auch wenn der ursprüngliche Taktmaster und jene die Zweitwegsuche einleitende Vermittlungsstelle VSt während des Suchvorgangs ausfallen sollten.

Zum Zeitpunkt t₀ ist das Fernmeldenetz synchron und die Vermittlungsstelle 1 weist den Takt mit der höchsten Priorität auf.

Zum Zeitpunkt t₁ erkennt die Vermittlungsstelle 5 den Ausfall der Verbindungsleitung zur Vermittlungsstelle 1 und sendet eine Mastersuchmeldung S 1/1 zu allen an die Vermittlungsstelle 5 angeschlossenen Vermittlungsstellen aus.

Zum Zeitpunkt t₂ leitet die Vermittlungsstelle 3 die von der Vermittlungsstelle 5 empfangene Mastersuchmeldung S 1/1 zu den an die Vermittlungsstelle 3 angeschlossenen Vermittlungsstellen 2 und 4 weiter.

Diese Vermittlungsstellen 2 und 4 senden zum Zeitpunkt t₃ die Mastersuchmeldung S 1/1 aus.

Da in der Vermittlungsstelle 5 zum Zeitpunkt t₄ die gesendete Mastersuchmeldung von der Vermittlungsstelle 1 nicht wieder empfangen wurde, ist eine Neusynchronisation des Fernmeldenetzes erforderlich. Die Vermittlungsstelle 5 sendet deshalb zum Zeitpunkt t₄ eine Masterresetmeldung R aus, wodurch die Neusynchronisation des Fernmeldenetzes eingeleitet wird und die Steuereinrichtung ST startet das Zeitglied Z1.

Zum Zeitpunkt t₅ leitet die Vermittlungsstelle 3 die empfangene Masterresetmeldung R zu allen an diese Vermittlungsstelle 3 angeschlossenen Vermittlungsstellen weiter.

Die Vermittlungsstellen 2 und 4 senden zum Zeitpunkt t₆ die Masterresetmeldung R aus.

Zum Zeitpunkt t₇ ist in der Vermittlungsstelle 5 die Verzögerungszeit abgelaufen, so daß die Vermittlungsstelle 5 als erste eine Taktmeldung T 3/5 sendet. Diese Taktmeldung T 3/5 wird von der Vermittlungsstelle 3 empfangen und zur Ermittlung des Takts mit der höchsten Priorität herangezogen.

Da der Takt der Vermittlungsstelle 3 eine höhere Priorität aufweist, sendet die Vermittlungsstelle 3 zum Zeitpunkt t₈ zu allen angeschlossenen Vermittlungsstellen eine Taktmeldung T 1/3 aus.

Die Vermittlungsstellen 2, 4 und 5 schalten zum Zeitpunkt t₉ den Takt um, senden die Taktmeldung T 1/3 aus, so daß zum Zeitpunkt t₁₀ der netzsynchrone Zustand wieder erreicht ist.

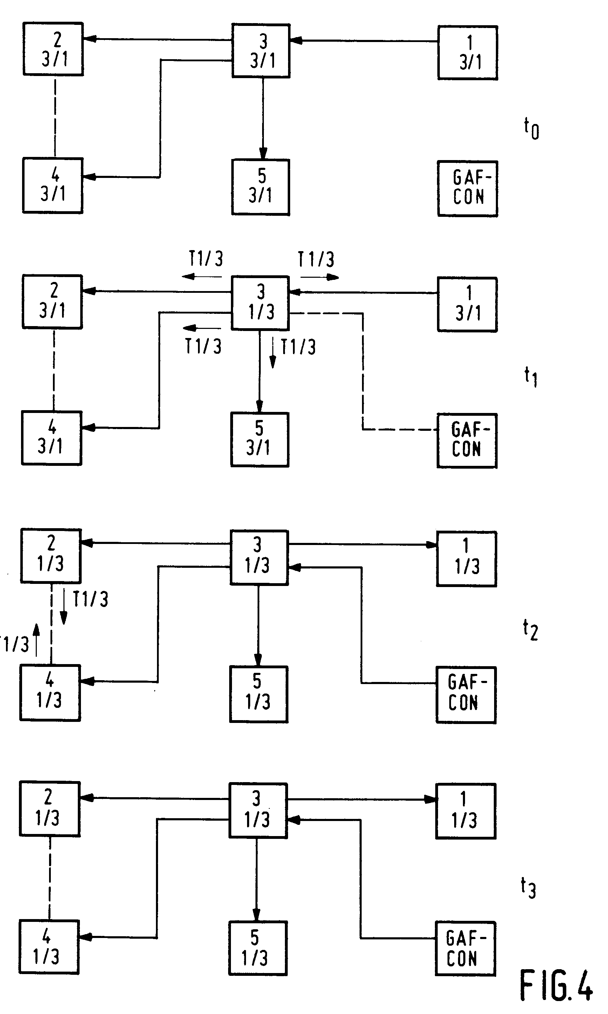

Der folgenden Beschreibung des hierarchischen Synchronisationsverfahren liegt die Annahme zugrunde, daß eine Netzübergangsverbindungsleitung zu einer Vermittlungsstelle einer höheren hierarchischen Netzebene in Betrieb genommen wird. Hierbei können mehrere Fälle unterschieden werden:
1. Die Vermittlungsstelle VSt mit der Netzübergangsverbindungsleitung war weder vorher noch wird sie nachher den Takt mit der höchsten Priorität aufweisen. In diesem Fall vermerkt die Vermittlungsstelle VSt nur die geänderte Priorität und der Aufbau des Taktbaums wird hiervon nicht beeinflußt.
2. Die Vermittlungsstelle VSt hat bereits den Takt mit der höchsten Priorität aufgewiesen. In diesem Fall wird eine Taktmeldung T zu allen angeschlossenen Vermittlungsstellen VSt gesendet, unter Verwendung der neuen Klassen-und Synchron-Kennung.
3. Aufgrund der neuen Priorität wird die Vermittlungsstelle VSt nun Taktmaster und von dieser Vermittlungsstelle VSt wird nun der Taktbaum aufgebaut (vgl. Fig. 4).

Wird eine Netzübergangsverbindungsleitung in Betrieb genommen, während im Fernmeldenetz eine Neusynchronisation durchgeführt wird, so wird die neue Klasse nur in der Vermittlungsstelle VSt gespeichert. Wird gerade eine Zweitwegsuche im Fernmeldenetz durchgeführt, so wird von den Vermittlungsstellen VSt die Suche abgebrochen und eine Neusynchronisation eingeleitet, falls jene Vermittlungsstelle VSt, an welche die in Betrieb genommene Netzübergangsverbindungsleitung angeschlossen ist, neuer Taktmaster wird. Andernfalls wird in der Vermittlungsstelle VSt nur die neue Klasse vermerkt.

Zum Zeitpunkt t₀ liegt der netzsynchrone Zustand vor und die Vermittlungsstelle 1 ist wegen der höheren Priorität der Synchron-Kennung Taktmaster. Zum Zeitpunkt t₁ wird die Netzübergangsverbindungsleitung zur Vermittlungsstelle GAFCON in Betrieb genommen. Da die Vermittlungsstelle 3 zum Zeitpunkt t₁ einen Takt mit der höchtsten Priorität aufweist, sendet diese zu allen angeschlossenen Vermittlungsstellen Taktmeldungen T 1/3 aus. Zum Zeitpunkt t₂ schalten die Vermittlungsstellen 1 und 3 ihre Takte um, während die Vermittlungsstellen 2 und 4 die Taktmeldungen T 1/3 aussenden. Zum Zeitpunkt t₃ ist der netzsynchrone Zustand wieder erreicht, wobei der Taktbaum von der Vermittlungsstelle GAFCON der höheren Netzebene aus aufgebaut ist.

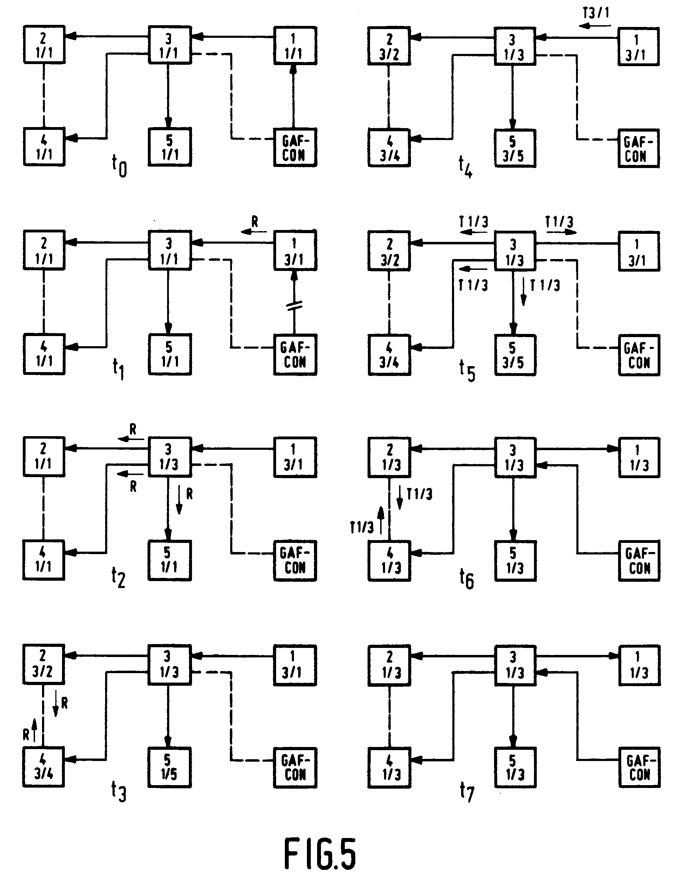

Im folgenden wird davon ausgegangen, daß eine weitere Netzübergangsverbindungsleitung zur der Vermittlungsstelle der höheren Netzebene besteht, wobei jene Netzübergangsverbindungsleitung ausfällt, über welche der Taktbaum aufgebaut wurde (vgl. Fig. 5). Fällt dagegen eine Vermittlungsstelle aus, welche zwar eine Netzübergangsverbindungsleitung zu einer Vermittlungsstelle der höheren Netzebene aufweist, jedoch nicht Taktmaster ist, so wird dies in der Vermittlungsstelle vermerkt, da jedoch der Taktmaster unverändert vorhanden ist, hat dies auf den aufgebauten Taktbaum im Leitungsnetz keinen Einfluß. Fällt dagegen, wie in Fig. 5 dargestellt, die Netzübergangsverbindungsleitung zum Taktmaster aus, so muß das Fernmeldenetz neu synchronisiert werden, da andere Vermittlungsstellen VSt ihrerseits Netzübergangsverbindungsleitungen zur Vermittlungsstelle GAFCON der höheren Netzebene aufweisen könnten. Da die Netzsynchronisation ohne Kenntnis des Netzabbilds erfolgt, muß zuerst dieses festgestellt werden, wobei eine Masterresetmeldung R bei Ausfall der Netzübergangsverbindungsleitung im Fernmeldenetz übertragen wird. Zur Sicherstellung, daß die Masterresetmeldung R das gesamte Fernmeldenetz durchlaufen kann, wird beim Aussenden von der Steuereinrichtung ST das Zeitglied Z1 gestartet, wodurch die Neusynchronisation um die Verzögerungszeit des Zeitglieds später beginnt. Jede Vermittlungsstelle VSt, welche eine Masterresetmeldung R erhält, startet mittels der Steuereinrichtung ST das Zeitglied Z1 und jene Vermittlungsstelle VSt, für welche die Verzögerungszeit zuerst abgelaufen ist, beginnt mit der Neusynchronisation.

Zum Zeitpunkt t₀ ist das Fernmeldenetz synchron und die Vermittlungsstellen 1 und 3 weisen eine Netzübergangsverbindungsleitung zur Vermittlungsstelle GAFCON der höheren Netzebene auf. Die Vermittlungsstelle VSt weist den Takt mit der höchsten Priorität auf, welchen diese über die Netzübergangsverbindungsleitung zur Vermittlungsstelle GAFCON der höheren Netzebene bezieht. Zum Zeitpunkt t₁ fällt diese Netzübergangsverbindungsleitung zur Vermittlungsstelle GAFCON der höheren Netzebene aus und die Vermittlungsstelle 1 sendet eine Masterresetmeldung R zu allen an diese angeschlossene Vermittlungsstelle VSt. Zu den Zeitpunkten t₂ und t₃ senden diese Vermittlungsstellen VSt jeweils die Masterresetmeldung R an alle daran angeschlossenen Vermittlungsstellen VSt aus. Da zum Zeitpunkt t₄ in der Vermittlungsstelle 1 die Verzögerungszeit des Zeitglieds Z1 zuerst abgelaufen ist, beginnt diese mit der Neusynchronisation und sendet eine Taktmeldung T 3/1 aus. Die Vermittlungsstelle 3 erkennt zum Zeitpunkt t₅, daß der ihr zugeordnete Takt die höhere Priorität aufweist und sendet ebenfalls zu allen daran angeschlossenen Vermittlungsstellen ihre Taktmeldung T 1/3 aus. Zum Zeitpunkt t₆ schaltet die Vermittlungsstelle 3 zur Taktableitung auf die Netzübergangsverbindungsleitung zur Vermittlungsstelle GAFCON der höheren Netzebene um. Die Vermittlungsstelle 1 erkennt, daß der Takt der Vermittlungsstelle 3 die höhere Priorität besitzt und schaltet auf den neuen Taktmaster in der Vermittlungsstelle 3 zur Ableitung des Takts um. Die Vermittlungsstellen 1 und 2 senden zum Zeitpunkt t₆ an alle angeschlossenen Vermittlungsstellen die Taktmeldungen T 1/3 aus. Zum Zeitpunkt t₇ ist der netzsynchrone Zustand wieder erreicht wobei der Taktbaum über eine andere Netzübergangsverbindungsleitung zur Vermittlungsstelle GAFCON der höheren Netzebene aufgebaut ist.

Das hierarchische Synchronisationverfahren wird im folgenden für ein Fernmeldenetz mit zwei Maschennetzen auf derselben hierarchischen Netzebene beschrieben, wobei die beiden Maschennetze Netzübergangsverbindungsleitungen zu einer Vermittlungsstelle GAFCON der höheren Netzebene aufweisen. Beim Ausfall einer Netzübergangsverbindungsleitung zur Vermittlungsstelle GAFCON der höheren Netzebene, wird jene Vermittlungsstelle VSt zum Taktmaster, welche eine Verbindungsleitung zum benachbarten Maschennetz PATRIOT aufweist. Damit wird erreicht, daß über das benachbarte Maschennetz PATRIOT ein Verbindungsweg zur Vermittlungsstelle GAFCON der höheren Netzebene aufgebaut werden kann.

Zum Zeitpunkt t₀ liegt der netzsynchrone Zustand vor und die Vermittlungsstelle 3 leitet über die Netzübergangsverbindungsleitung zur Vermittlungsstelle GAFCON ihren Takt ab. Zwischen der Vermittlungsstelle 1 und dem benachbarten Maschennetz PATRIOT besteht eine Verbindung, wobei das benachbarte Maschennetz PATRIOT selbst eine Netzübergangsverbindungsleitung zur Vermittlungsstelle GAFCON der höheren Netzebene aufweist. Zum Zeitpunkt t₁ wird die Netzübergangsverbindungsleitung zwischen der Vermittlungsstelle 3 und der Vermittlungsstelle GAFCON der höheren Netzebene unterbrochen. Die Vermittlungsstelle 3 sendet zu allen angeschlossenen Vermittlungsstellen Masterresetmeldungen R aus und startet das Zeitglied Z1. Zum Zeitpunkt t₂ sind, infolge der im Maschennetz durchgelaufenen Masterresetmeldungen R, in den verschiedenen Vermittlungsstellen VSt die im Speicher SP abgespeicherten Klassen- und Synchron-Kennung diesen zugeordnet worden.

Zum Zeitpunkt t₃ ist in der Vermittlungsstelle 3 die Verzögerungszeit des Zeitglieds Z1 zuerst abgelaufen, sodaß diese mit der Neusynchronisation des Netzes beginnt und eine Taktmeldung T 3/3 an alle angeschlossenen Vermittlungsstellen VSt absendet. Die Vermittlungsstelle 5 erkennt anhand des Vergleichs der empfangenen Taktmeldung T mit der im Speicher SP abgespeicherten Klassen- und Synchron-Kennung die niedrigere Priorität und schaltet ihren Takt um. Ebenso erfolgt dies in der Vermittlungsstelle 4. Die Vermittlungsstellen 1 und 2 erkennen zum Zeitpunkt t₄, daß der zugeordnete Takt die höhere Priorität aufweist und senden an alle angeschlossenen Vermittlungsstellen entsprechende Taktmeldungen T 2/1 und T 3/2 aus.

Die Vermittlungsstelle 4 schaltet zum Zeitpunkt t₅ aufgrund der empfangenen Taktmeldung mit höherer Priorität ebenso wie die Vermittlungsstellen 1 und 2 den Takt um.

Die Vermittlungsstelle 3 leitet zu allen angeschlossenen Vermittlungsstellen VSt die empfangene Taktmeldung T 2/1 mit der höchsten Priorität weiter. Aufgrund dieser neuen Taktmeldung T 2/1 der höheren Priorität erfolgt zum Zeitpunkt t₆ in den Vermittlungsstellen 2, 3 und 4 die Taktumschaltung bzw. Weitergabe der Taktmeldung T 2/1. Zum Zeitpunkt t₇ ist im Maschennetz der netzsynchrone Zustand wieder erreicht, wobei über die Vermittlungsstelle 1, welche eine Verbindung zum benachbarten Maschennetz PATRIOT aufweist, der Takt bezogen wird.

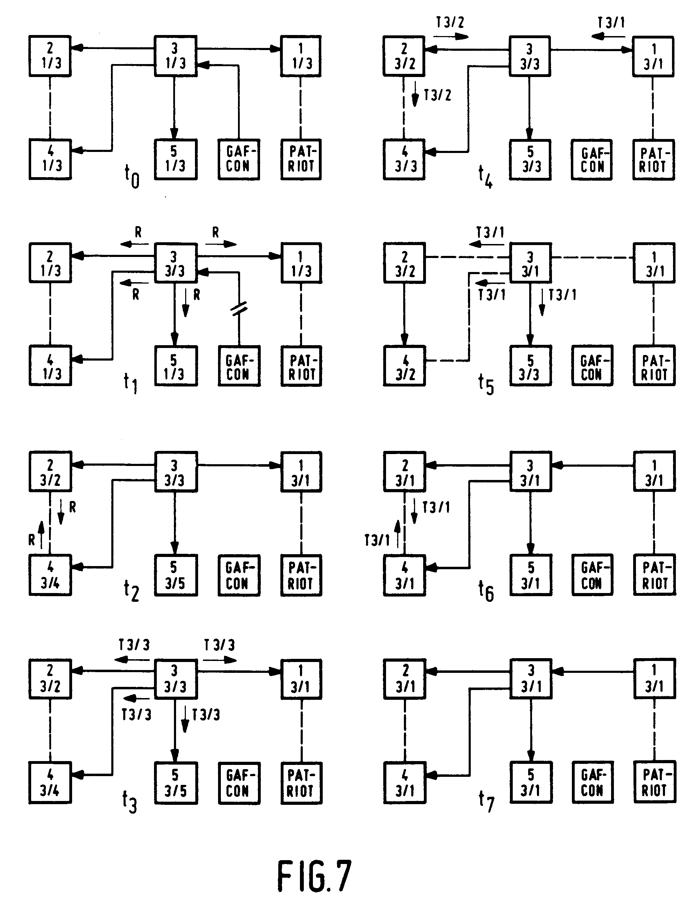

Anhand Fig. 7 wird das hierarchische Synchronisationsverfahren für den Fall einer Netzstruktur, bestehend aus zwei Maschennetzen der gleichen Hierarchiestufe und einer Netzübergangsverbindungsleitung eines der beiden Maschennetze zu einer Vermittlungsstelle GAFCON der höheren Netzebene, beschrieben. Fällt nun die Netzübergangsverbindungsleitung zur Vermittlungsstelle GAFCON der höheren Netzebene aus, so führt dies im Maschennetz zu einer Neusynchronisation, wobei das benachbarte Maschennetz PATRIOT in die Netzsynchronisation nicht einbezogen wird. Dadurch wird die Bildung von Taktbäumen über mehrere Maschennetze hinweg vermieden, wobei als Nachteil möglicherweise eine schlechtere Qualität von Verbindungen zu den benachbarten Maschennetzen sich einstellen kann.

In Fig. 7 ist der netzsynchrone Zustand zum Zeitpunkt t₀ dargestellt. Die Vermittlungsstelle 1 weist eine Verbindungsleitung zu dem benachbarten Maschennetz PATRIOT auf. Zu Zeitpunkt t₁ wird die Netzübergangsverbindungsleitung zur Vermittlungsstelle GAFCON der höheren Netzebene unterbrochen, wodurch die Vermittlungsstelle 3 an alle angeschlossenen Vermittlungsstellen Masterresetmeldungen R sendet und das Zeitglied Z1 startet. Zum Zeitpunkt t₂ ist allen Vermittlungsstellen VSt des Maschennetzes die im Speicher SP gespeicherte Klassen- und Synchron-Kennung zugeordnet. In der Vermittlungsstelle 3 ist die Verzögerungszeit des Zeitglieds Z1 zuerst abgelaufen, so daß diese Vermittlungsstelle 3 zuerst mit der Neusynchronisation des Maschennetzes beginnt und an alle angeschlossenen Vermittlungsstellen die Taktmeldung T 3/3 sendet.

Aufgrund des Vergleichs der im Speicher SP gespeicherten Klassen- und Synchron-Kennung mit der empfangenen Taktmeldung T 3/3, erkennt zum Zeitpunkt t₄ die Vermittlungsstelle 5 die höhere Priorität der empfangenen Taktmeldung T 3/3, schaltet ihren Takt um und speichert die Taktmeldung T 3/3 im Speicher SP1. Die Vermittlungsstellen 1 und 2 erkennen aufgrund des Vergleichs die höhere Priorität der im Speicher SP gespeicherten Klassen- und Synchron-Kennung und senden ihrerseits an alle angeschlossenen Vermittlungsstellen VSt eine Taktmeldung T 3/1 und T3/2 aus.

Aufgrund des in jeder Vermittlungsstelle VSt vorgenommenen Vergleichs erfolgt in der Vermittlungsstelle 4 zum Zeitpunkt t₅ die Taktumschaltung, ebenso wie dies in der Vermittlungsstelle 2 durchgeführt wird. Die Vermittlungsstelle 3 sendet die Taktmeldung T 3/1 mit der höchsten Priorität an alle angeschlossenen Vermittlungsstellen VSt aus und der Takt der Vermittlungsstelle 1 wird zur Ableitung des Taktbaums herangezogen. Zum Zeitpunkt t₆ erfolgt in den Vermittlungsstellen 2, 3 und 4 die Taktumschaltung und zum Zeitpunkt t₇ ist der netzsynchrone Zustand wieder erreicht. Der Takt mit der höchsten Priorität wird von der Vermittlungsstelle 1 des Maschennetzes bezogen.

## Patentansprüche

1. Synchronisiertes vermaschtes Fernmeldenetz,
- bei dem jeder Vermittlungsstelle (VSt) eine von Vermittlungsstelle zu Vermittlungsstelle unterschiedliche Synchronkennung zugeordnet ist,
- und in jeder Vermittlungsstelle eine mit dem Fernmeldenetz in Verbindung stehende Steuereinrichtung (ST) an die angeschlossenen Vermittlungsstellen mindestens die eigene Synchronkennung und die Synchronkennung der Vermittlungsstelle von der die betreffende Vermittlungsstelle ihren Takt bezieht übermittelt,
- wobei die Steuereinrichtungen anhand der empfangenen Synchronkennungen die Takthierarchie ermitteln und den Takt mit der höchsten Priorität zur Synchronisation heranziehen,
dadurch gekennzeichnet,
daß die Steuereinrichtung (ST) nur bei einer Änderung des Netzabbildes jeweils eine einzige Meldung erzeugt und in die Meldungen ein den Betriebszustand des Fernmeldenetzes kennzeichnendnes Merkmal (T, S, R) einfügt.

2. Synchronisiertes vermaschtes Fernmeldenetz nach Anspruch 1,
dadurch gekennzeichnet,
daß jeder Vermittlungsstelle entsprechend ihrer Stellung in der Hierarchie eine Klassenkennung zugeordnet ist, die von der Steuereinrichtung (ST) in jede Meldung eingefügt wird.

3. Synchronisiertes vermaschtes Fernmeldenetz nach Anspruch 1, oder 2,
dadurch gekennzeichnet,
daß die Steuereinrichtung (ST) anhand der zuerst empfangenen Synchron-Kennung bzw. Klassen-Kennung die Wegeauswahl vornimmt.

4. Synchronisiertes vermaschtes Fernmeldenetz nach Anspruch 1, 2, oder 3,
dadurch gekennzeichnet,
daß jede Steuereinrichtung (ST) nach Ermittlung eines Taktes mit einer höheren Priorität als des bisher verwendeten Taktes eine Taktmeldung (T) zu allen angeschlossenen Vermittlungsstellen sendet.

5. Synchronisiertes vermaschtes Fernmeldenetz nach Anspruch 1,
dadurch gekennzeichnet,
- daß durch die Steuereinrichtung (ST) in jeder Vermittlungsstelle die Verbindungsleitung über die der Takt bezogen wird überwacht wird und bei Ausfall des bezogenen Taktes die Steuervorrichtung (ST) eine als Mastersuchmeldung (S) gekennzeichnete Meldung erzeugt und an alle noch angeschlossenen Vermittlungsstellen sendet,
- alle Steuereinrichtungen (ST) die eine Mastersuchmeldung (S) erhalten und bisher nicht die Vermittlungstelle mit der höchsten Priorität waren, die empfangene Mastersuchmeldung (S) an die angeschlossenen Vermittlungsstellen weitersenden,
- und die Steuereinrichtungen (ST) der Vermittlungsstelle die bisher die Vermittlungsstelle mit der höchsten Priorität (Taktmaster) war, bei Empfang einer Mastersuchmeldung (S) eine als Taktmeldung (T) gekennzeichnete Meldung an alle an ihr angeschlossenen Vermittlungsstellen sendet.

6. Synchronisiertes vermaschtes Fernmeldenetz nach Anspruch 5,
dadurch gekennzeichnet,
- daß die Steuereinrichtung (ST) mit Aussendung einer Mastersuchmeldung (S) ein Zeitglied (Z) startet und daß bei innerhalb der Verzögerungszeit eintreffenden Mastersuchmeldungen die Steuereinrichtung (ST) das Zeitglied (Z) jeweils neu startet
- und wenn die Steuereinrichtung (ST) innerhalb der Verzögerungszeit eine Taktmeldung mit einer höheren Taktpriorität als die Taktpriorität der betroffenen Vermittlungsstelle empfängt, die Steuereinrichtung (ST) eine Masterresetmeldung (R) aussendet und ein weiteres Zeitglied (Z1) startet.

7. Synchronisiertes vermaschtes Fernmeldenetz nach Anspruch 6,
dadurch gekennzeichnet,
daß die Steuereinrichtung (ST) in Abhängigkeit der Funktion von gesendeter Synchronkennung und evtl. gesendeter Klassen-Kennung, die Verzögerungszeit des weiteren Zeitgliedes (Z1) unterschiedlich vorgibt.

8. Vermittlungsstelle für ein synchronisiertes vermaschtes Fernmeldenetz
- wobei der Vermittlungsstelle (VSt) eine von Vermittlungsstelle zu Vermittlungsstelle unterschiedliche Synchronkennung zugeordnet ist,
- und in der Vermittlungsstelle eine mit dem Fernmeldenetz verbindbare Steuereinrichtung (ST) an angeschlossene Vermittlungsstellen mindestens die eigene Synchronkennung und die Synchronkennung der Vermittlungsstelle von der die betreffende Vermittlungsstelle ihren Takt bezieht übermittelt,
- wobei die Steuereinrichtung (ST) anhand der empfangenen Synchronkennungen die Takthierarchie ermittelt und den Takt mit der höchsten Priorität zur Synchronisation heranzieht,
dadurch gekennzeichnet,
daß die Steuereinrichtung (ST) nur bei einer Änderung des Netzabbildes jeweils eine einzige Meldung erzeugt und in die Meldungen ein den Betriebszustand des Fernmeldenetzes kennzeichnendnes Merkmal (T, S, R) einfügt.

9. Vermittlungsstelle für ein vermaschtes Fernmeldenetz nach Anspruch 8,
dadurch gekennzeichnet,
daß jeder Vermittlungsstelle entsprechend ihrer Stellung in der Hierarchie eine Klassenkennung zugeordnet ist, die von der Steuereinrichtung (ST) in jede Meldung eingefügt wird.

10. Vermittlungsstelle für ein vermaschtes Fernmeldenetz nach Anspruch 9 oder 10,
dadurch gekennzeichnet,
daß bei dem die Steuereinrichtung (ST) anhand der zuerst empfangenen Synchron-Kennung bzw. Klassen-Kennung die Wegeauswahl vornimmt.

## Claims

1. Synchronized mesh telecommunication network,
- in which each exchange (Vst) is assigned a different synchronization identification,
- and in each exchange a control arrangement (ST) connected to the telecommunication network transmits to connected exchanges at least their own synchronization identification and the synchronization identification of the exchange from which that particular exchange derives its clock,
- in which the control arrangements determine the clock hierarchy in response to the received synchronization identifications and for the synchronization use the clock having the highest priority,
characterized in that the control arrangement (ST) generates a single message each time the network configuration changes and inserts into the messages a character (T, S, R) featuring the operating condition of the communication network.

2. Synchronized mesh telecommunication network as claimed in Claim 1, characterized in that a class identification is assigned to each exchange in accordance with its position in the hierarchy, which class identification is inserted into each message by the control arrangement (ST).

3. Synchronized mesh telecommunication network as claimed in Claim 1 or 2, characterized in that the control arrangement (ST) selects the route in response to the synchronization identification or class identification received first.

4. Synchronized mesh telecommunication network as claimed in Claim 1, 2 or 3, characterized in that each control arrangement (ST) transmits a clock message (T) to all connected exchanges after a clock has been established having a higher priority than the clock used thus far.

5. Synchronized mesh telecommunication network as claimed in Claim 1, characterized in that
- the control arrangement (ST) in each exchange monitors the connection line via which the clock is derived and, in case the derived clock drops out, the control arrangement (ST) generates a message featured as master search message (S) and transmits same to all exchanges still connected,
- all the control arrangements (ST) which receive a master search message (S) and were thus far not the highest priority exchange, convey the received master search message (S) to the connected exchanges,
- and the control arrangement (ST) of the thus far highest priority exchange (clock master) transmits a message featured as a clock message (T) to all the exchanges connected thereto when a master search message (S) is received.

6. Synchronized mesh telecommunication network as claimed in Claim 5, characterized in that
- the control arrangement (ST) starts a timer element (Z) by transmitting a master search message (S) and in that the control arrangement (ST) re-starts the timer element (Z) each time a master search message arrives within the delay period,
- and if the control arrangement (ST) receives a clock message having a higher priority than the priority of that particular exchange within the delay period, the control arrangement (ST) transmits a master reset message (R) and starts another timer element (Z1).

7. Synchronized mesh telecommunication network as claimed in Claim 6, characterized in that the control arrangement (ST) defines a different delay time for the timer element (Z1) in response to the function of the transmitted synchronization identification and, possibly, transmitted class identification.

8. Exchange for a synchronized mesh telecommunication network
- in which each exchange (VSt) is assigned a different synchronization identification,
- and in the exchange a control arrangement (ST) connectable to the telecommunication network transmits to connected exchanges at least their own synchronization identification and the synchronization identification of the exchange from which that particular exchange derives its clock,
- while the control arrangement (ST) defines the clock hierarchy in response to the received synchronization identifications and uses the highest priority clock for the synchronization,
characterized in that the control arrangement (ST) generates a single message each time the network configuration changes and inserts into the messages a character (T, S, R) featuring the operating condition of the communication network.

9. Exchange for a synchronized mesh telecommunication network as claimed in Claim 8, characterized in that a class identification is assigned to each exchange in accordance with its position in the hierarchy, which class identification is inserted into each message by the control arrangement (ST).

10. Exchange for a mesh telecommunication network as claimed in Claim 9 or 10, characterized in that the control arrangement (ST) in the telecommunication network selects the route in response to the synchronization identification or class identification received first.

## Revendications

1. Réseau de télécommunications maillé synchronisé, dans lequel :
- à chaque poste de commutation (VSt) est affecté un indicatif de synchronisation différent d'un poste de commutation à un autre, et
- dans chaque poste de commutation, un dispositif de commande (ST) en liaison avec le réseau de télécommunications transmet aux postes de commutation raccordés au moins l'indicatif de synchronisation propre et l'indicatif de synchronisation du poste de commutation duquel le poste de commutation concerné obtient sa cadence,
- les dispositifs de commande déterminant la hiérarchie de cadence sur la base des indicatifs de synchronisation reçus et utilisant la cadence de la priorité la plus haute pour la synchronisation,
caractérisé en ce que le dispositif de commande (ST) ne produit respectivement un message que lors d'une modification de la topologie du réseau, et introduit dans les messages une caractéristique (T, S, R) caractérisant l'état d'exploitation du réseau de télécommunications.

2. Réseau de télécommunications maillé synchronisé selon la revendication 1, caractérisé en ce qu'à chaque poste de commutation est affecté, en fonction de sa position dans la hiérarchie, un indicatif de classe qui est introduit dans chaque message par le dispositif de commande (ST).

3. Réseau de télécommunications maillé synchronisé selon la revendication 1 ou 2, caractérisé en ce que le dispositif de commande (ST) effectue la sélection du trajet sur la base de l'indicatif de synchronisation ou l'indicatif de classe reçu en premier.

4. Réseau de télécommunications maillé synchronisé selon la revendication 1, 2 ou 3, caractérisé en ce que chaque dispositif de commande (ST) envoie, après détermination d'une cadence de priorité plus élevée que la cadence utilisée jusqu'à présent, un message de cadence (T) à tous les postes de commutation raccordés.

5. Réseau de télécommunications maillé synchronisé selon la revendication 1, caractérisé en ce que :
- dans chaque poste de commutation, la ligne de liaison d'où est obtenue la cadence est contrôlée par le dispositif de commande (ST) et, en cas de défaillance de la cadence obtenue, le dispositif de commande (ST) produit un message qualifié de message de recherche de maître (S) et l'envoie à tous les postes de commutation encore raccordés,
- tous les dispositifs de commande (ST) qui reçoivent un message de recherche de maître (S) et qui n'étaient pas jusqu'à présent le poste de commutation de la plus haute priorité, transmettent le message de recherche de maître (S) aux postes de commutation raccordés, et
- les dispositifs de commande (ST) du poste de commutation, qui était jusqu'à présent le poste de commutation de la plus haute priorité (maître de cadence), envoient, à la réception d'un message de recherche de maître (S), un message qualifié de message de cadence (T) à tous les postes de commutation qui y sont raccordés.

6. Réseau de télécommunications maillé synchronisé selon la revendication 5, caractérisé en ce que :
- le dispositif de commande (ST) lance, par l'émission d'un message de recherche de maître (S), un élément de temporisation (Z) et, dans le cas des messages de recherche de maître tombant à l'intérieur du temps de temporisation, le dispositif de commande (ST) relance chaque fois l'élément de temporisation (Z), et
- lorsque le dispositif de commande (ST) reçoit à l'intérieur du temps de temporisation un message de cadence d'une priorité de cadence plus élevée que la priorité de cadence du poste de commutation concerné, le dispositif de commande (ST) émet un message de remise à zéro de maître (S) et lance un autre élément de temporisation (Z1).

7. Réseau de télécommunications maillé synchronisé selon la revendication 6, caractérisé en ce que le dispositif de commande (ST) prédétermine, selon la fonction de l'indicatif de synchronisation envoyé et éventuellement de l'indicatif de classe envoyé, le temps de temporisation de l'autre élément de temporisation (Z1) de manière différente.

8. Poste de commutation pour un réseau de télécommunications maillé synchronisé, dans lequel:
- au poste de commutation (VSt) est affecté un indicatif de synchronisation différent d'un poste de commutation à l'autre, et
- dans le poste de commutation, un dispositif de commande (ST) qui peut être raccordé au réseau de télécommunications transmet aux postes de commutation raccordés au moins son propre indicatif de synchronisation et l'indicatif de synchronisation du poste de commutation d'où le poste de commutation concerné obtient sa cadence,
- le dispositif de commande (ST) déterminant sur la base des indicatifs de synchronisation reçus la hiérarchie de cadence et utilisant la cadence de la plus haute priorité pour la synchronisation,
caractérisé en ce que le dispositif de commande (ST) ne produit un message que lors d'une modification de la topologie du réseau et introduit dans les messages une caractéristique (T, S, R) caractérisant l'état d'exploitation du réseau de télécommunications.

9. Poste de commutation pour un réseau de télécommunications maillé selon la revendication 8, caractérisé en ce qu'à chaque poste de commutation en fonction de sa position dans la hiérarchie est affecté un indicatif de classe, qui est introduit par le dispositif de commande (ST) dans chaque message.

10. Poste de commutation pour un réseau de télécommunications maillé selon la revendication 9 ou 10, caractérisé en ce que le dispositif de commande (ST) effectue la sélection du trajet sur la base de l'indicatif de synchronisation ou de l'indicatif de classe qui est reçu en premier lieu.
